Europäisches Patentamt

European Patent Office

Office européen des brevets

(19)

(11) **EP 0 872 985 A2**

## (12) EUROPEAN PATENT APPLICATION

(43) Date of publication:
**21.10.1998 Bulletin 1998/43**

(51) Int Cl.$^6$: **H04L 27/26**

(21) Application number: **98302774.9**

(22) Date of filing: **06.04.1998**

(84) Designated Contracting States:
**AT BE CH CY DE DK ES FI FR GB GR IE IT LI LU
MC NL PT SE**
Designated Extension States:
**AL LT LV MK RO SI**

(30) Priority: **14.04.1997 GB 9707517**

(71) Applicant: **NDS LIMITED
West Drayton, Middlesex UB7 ODQ (GB)**

(72) Inventors:
• **Turner, Adrian Charles
  Eastleigh, Hampshire SO53 3DW (GB)**
• **Cradock, Graham
  Winchester, Hampshire SO21 1QQ (GB)**

(74) Representative: **Anderson, Angela Mary
NDS Limited,
Stoneham Rectory
Stoneham Lane
Eastleigh, Hampshire SO50 9NW (GB)**

(54) **Symbol synchronisation in multicarrier receivers**

(57)     This invention relates generally to the processing of orthogonal frequency division multiplex signals, and more precisely methods of synchronising a receiver of an incoming orthogonal frequency division multiplex (OFDM) signal.

The invention provides methods and apparatus for synchronising a receiver to an incoming multi-carrier signal, such as an OFDM signal. By making use of inherent redundancy within the prior art method, significant reductions can be made in terms of processing power, speed of execution and accuracy.

Fig.1.

**Description**

The present invention relates to the processing of Orthogonal Frequency Division Multiplex (OFDM) signals, and more precisely methods of synchronising a receiver of an incoming orthogonal frequency division multiplex signal.

An OFDM signal consists of a stream of symbols, each symbol containing many bits of data. In an OFDM receiver the data is recovered from the received signal by calculation. The main problem with this is that it is difficult to ensure that the calculation is performed on the correct portion of the received signal when no timing information is contained in the received signal.

The current method of ensuring the calculation is performed on the correct portion of the input signal uses a method known as the Early-Late Fourier Transform algorithm. This technique works by performing a Discrete Fourier Transform (DFT) calculation that is timed to be early with respect to the data contained in the input signal. This is known as the early DFT. A second DFT calculation, known as the late DFT, timed to be late with respect to the data contained in the input signal is also performed. The noise power on the early and late DFTs is derived and a measure of data quality is found.

Since the data portion of the input signal sits between the early and late DFTs, an average of the measured data quality is used to generate a synchronising signal which is then used to synchronise the timing of the receiver to position the data DFT in the place for optimum recovery of the OFDM data.

The current method calculates one complete early DFT and one complete late DFT as well as the complete middle DFT required for recovering the data. The early and late DFTs are then used to synchronise the receiver as described above. One of the main disadvantages with the current method is that the hardware required to perform the DFTs is costly and processor intensive.

According to one aspect of the present invention there is provided a method of synchronising a receiver of an incoming multi-carrier signal which includes data, the method comprising the steps of;

detecting the data from the incoming signal by a process of calculation;
deriving synchronising signals by a process of calculation, the synchronising signals being calculated in part from the incoming signal and in part from the calculation performed for detecting the data and;
using the synchronising signals to synchronise the receiver.

According to a second aspect of the present invention, there is provided apparatus for synchronising a receiver of an incoming multi-carrier signal which includes data, the apparatus comprising;

a detector for detecting the data from the incoming signal by a process of calculation;
a deriving element for deriving synchronising signals by a process of calculation, the synchronising signals being calculated in part from the incoming signal and in part from the calculation performed for detecting the data and;
a synchroniser for employing the synchronising signals to synchronise the receiver.

The present invention has significant advantages over the prior art by making use of the redundancy inherent in the prior art. This not only reduces the amount of processing power required to perform the method, but also increases the speed of processing significantly, making the method even more accurate than the prior art.

The invention will now be described further, with reference to the accompanying drawings, in which:

Figure 1 is a diagram showing an overview of an OFDM receiver according to the present invention;
Figure 2 is a diagram showing the relative position of the early, middle and late sections of an incoming OFDM signal;
Figure 3 is a diagram showing a first detailed embodiment of the present invention;
Figure 4 is a diagram showing a second detailed embodiment of the present invention;
Figure 5 shows a third detailed embodiment of the present invention; and
Figure 6 is a diagram illustrating a number of output vectors.

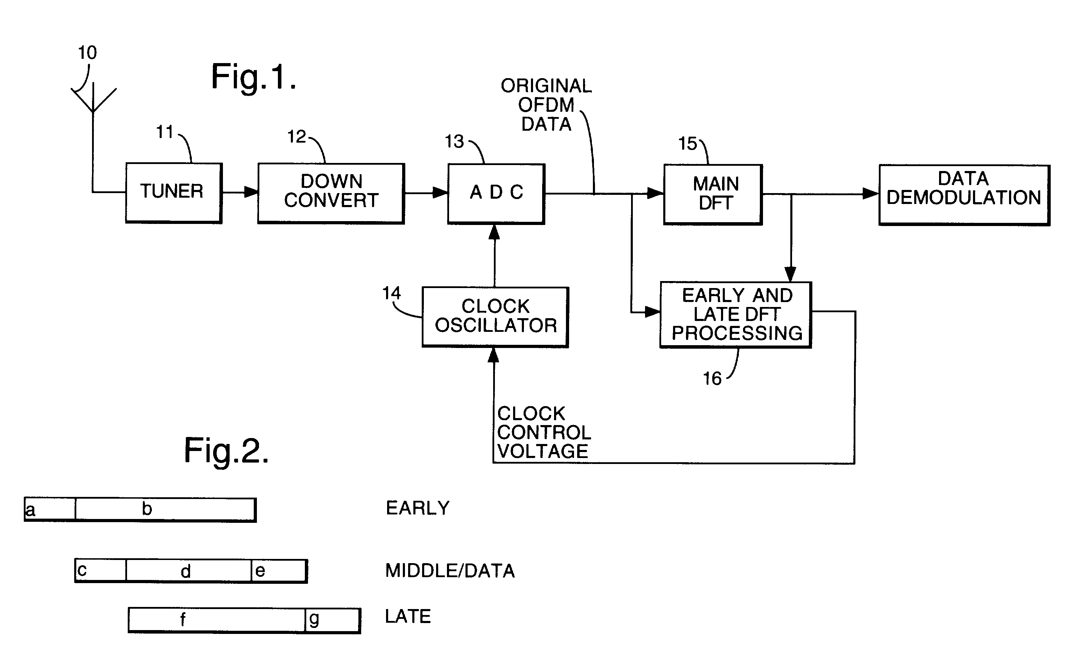

Figure 1 depicts an Orthogonal Frequency Division Multiplex (OFDM) receiver, used to receive OFDM signals. An OFDM signal contains a stream of symbols, each symbol containing many bits of data.

The input signal 10 is fed through a tuner 11 and a down-converter 12 where the frequency of the input signal is reduced. The signal is then sampled by an analogue to digital converter 13 under control of a clock synthesiser 14. A data detector, comprising a main DFT 15 and an early and late DFT processor 16, generates a synchronising signal that is fed back to the clock synthesiser 14, the loop resulting in receiver synchronisation.

Figure 2 shows the relationship between the data, the early and the late portions of the digital OFDM signal. The data portion comprises sections c, d and e. The early portion, which is earlier in time than the data portion, comprises sections a and b. The late portion, which is later in time than the data portion, comprises sections f and g.

It can be seen that the early portion can also be described in terms of the data portion, i.e. the early portion can be represented by sections a, c and d.

This is the same as adding section a to the data portion and then subtracting section e.

The same is true of the late portion which can be represented by sections d, e and g - this is the same as adding section g to the data portion and then subtracting section c.

The data DFT output signal may be described as:

$$X(k) = \sum_{n=0}^{n=N-1} \chi(n) W_N^{kn}$$

where:  $X(k)$  is a frequency signal

$\chi(n)$  is a time signal

(Equation 1)

The late DFT output signal may be described similarly as:

$$X'(k) = \sum_{n=M}^{n=N+M-1} \chi(n) W_N^{kn}$$

where:  $M < N$

(Equation 2)

However, this may also be obtained by use of the data DFT (which is required anyway, to recover the data), by means of the following:

$$X'(k) = \sum_{n=0}^{n=N-1} \chi(n) W_N^{kn} + \sum_{n'=0}^{n'=M-1} \chi(N+n') W_N^{kn'} - \sum_{n'=0}^{n'=M-1} \chi(n) W_N^{kn'}$$

(Equation 3)

and simplifying gives:

$$X'(k) = X(k) + \sum_{n'=0}^{n'=M-1} [\chi(N+n') - \chi(n')] W_N^{kn'}$$

(Equation 4)

A similar process is performed, also making use of the data DFT, to obtain the early DFT output. This gives substantial computational savings over a direct early and late calculation, as only M subtractions, a $\log_2 M$ pass FFT and N additions need to be performed, to produce one complete early or late output.

The late DFT, as described by equation 2, is a modified DFT, that has coefficients indexed by n' running from M to N+M-1 (as opposed to the usual 0 to N-1). This gives rise to a constant phase offset, which affects all the late (or early) signals calculated in this way. As the method of time synchronisation using Early-Late DFTs relies only on measuring the noise on the early and the late data, then this constant phase offset has no practical consequence to the algorithm.

The DFT process is performed more efficiently by use of the widely known Fast Fourier Transform (FFT) algorithm. This is used for the calculation of the DFT on the data, and is mathematically identical to the DFT. To use the FFT algorithm in calculating the early or late DFT, it should be noted that the DFT in the right hand side of equation 4 is not 'square', i.e. there are more outputs than inputs (M being smaller than N). However, this is not a problem, as generally:

a) not all FFT output values are required in the Early-Late algorithm, and
b) M is usually a power of two fraction of N (i.e. 1/8, 1/16, 1/32 etc.).

Property b) means that only an MxM size FFT needs to be performed, with the remaining outputs (N-M of them) being phase rotated copies of these M outputs. Property a) means that only certain output values need to be calculated, and so there is some computational saving. This is not always large with the FFT algorithm; however, when only a small proportion of the outputs are required, then an alternative algorithm may be better (e.g. the Goertzel algorithm).

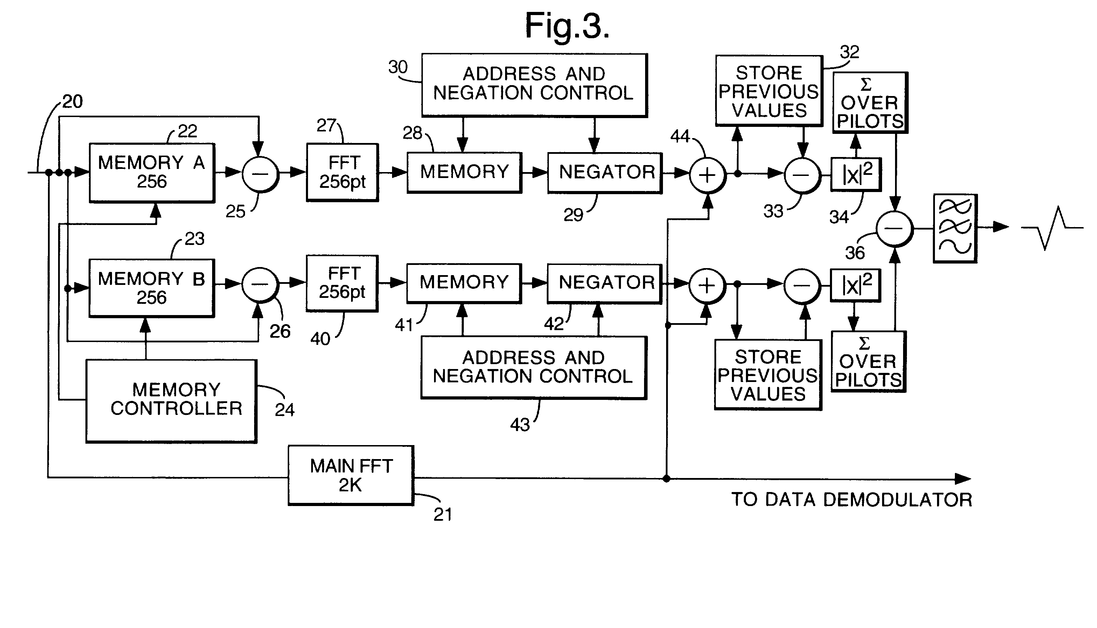

Figure 3 shows in more detail an embodiment employing the above method and represents an expansion of the early and late DFT processor 16 as shown in Figure 1.

Digital OFDM data 20 is output from the analogue to digital converter (ADC) 13 shown in Figure 1. The data is fed into a Main FFT processor 21, the output of which is used to demodulate the data in the input signal. The Main FFT processor 21 is a 2K point FFT processor.

A memory 22 and a subtractor 25 are arranged such as to perform the subtraction of sections a - e as shown in Figure 2.

This is achieved by storing the part of the input signal as it comes in, and under control of a memory controller 24 releasing the stored data at the same time as the corresponding data which is to be subtracted from it. This achieves the effect of subtracting section e from section a. A similar configuration is used for the corresponding late portion of the signal by use of a memory 23 and a negator 26 to generate g - c.

The output from the subtractor 25 is then input at a FFT processor 27 which is a 256 point FFT processor. This performs an FFT on the data and the 256 values generated are then stored in memory 28. Under control of the address and negation controller 30, 2K of values are generated from the 256 values stored in memory 28. This generation of the extra values is performed by various address permutations and data negations.

An adder 44 adds the 2K of values to the 2K of values generated by the main FFT processor 21. This results in 2K of values representing the early part of the input signal being input to a memory 32. The 2K of values are stored in the memory 32 and at the same time the previous set of values stored in the memory 32 are released and are subtracted from the current set of values by a subtractor 33. The power of the values is then calculated by a processor 34. These values are then summed over the OFDM pilots giving a value for the early noise power.

A similar process is used to generate the late noise power as shown in the lower limb of Figure 3, the lower limb comprising a memory 23, a subtractor 26, a FTT processor 40, a memory 41, a negator 42, an address and negation controller 43. This process is identical apart from the fact that it acts on a portion of the input signal that is timed later than the early portion.

The early noise power is then subtracted from the late noise power by the subtractor 36 before being passed through a digital low pass filter 37. It is this output signal that is used to synchronise the receiver.

An improvement on the above method allows the amount of computation to be reduced even further. If the required FFT output values are regularly spaced, then a pre-FFT decimation process can reduce the input data sample size by a potentially large factor. Decimation involves 'throwing away' samples at regular intervals. In this case, some of the techniques described above may be unnecessary.

By decimating the input sample stream, before performing the DFT, the size of the DFT can be reduced. For example, decimation by 4 would result in only a quarter of the number of samples in the output stream as in the input stream. Some information is lost in this process, so some pre-filtering is necessary. A comb filter can be used to achieve this, and has the benefit of being a very simple form of filtering. If the 'teeth' of the comb can be arranged to lie coincident with the desired DFT output bins, then clearly the noise estimation can be made to work in a similar way to before, but the Fourier transform computation can be significantly simplified. In a possible implementation, the data would first be decimated by 8, so that the range of frequencies remaining in the data stream were coincident with scattered pilot locations in the OFDM signal (the scattered pilots are regularly spaced in frequency over the OFDM symbol). Then, a much smaller sized FFT would be performed on this data, with the relevant output bins being selected for noise power measurement.

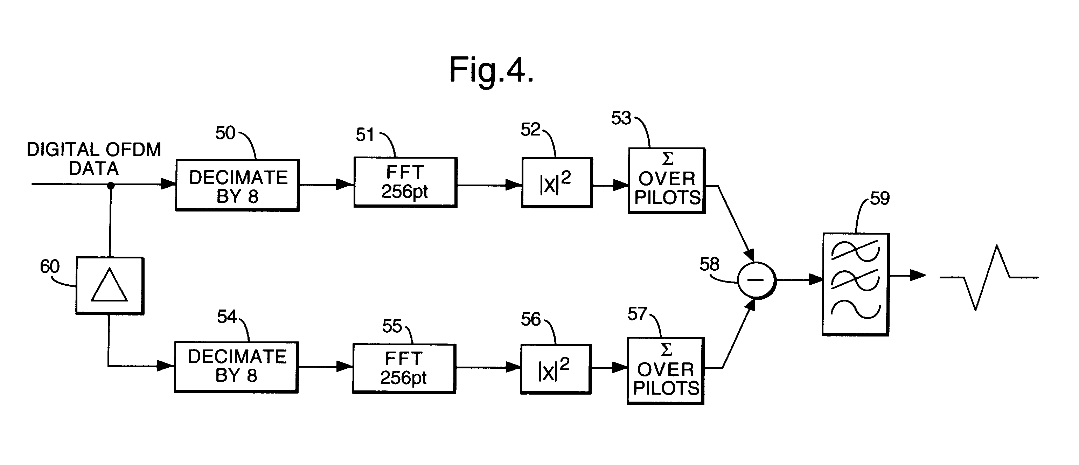

Figure 4 shows an embodiment of the present invention describing this improvement.

The digital OFDM data is input to decimator 50 which reduces the number of values by 8. The digital OFDM data is also fed into delay 60 which has the effect of allowing the early portion of the signal to run along the bottom leg of the figure and the late portion of the signal to run along the top leg of the figure.

Taking the late part of the signal, decimator 50 reduces the number of values by 8 by filtering out unwanted information. The result is that only 256 of the initial 2K of values are kept. This results in a much smaller FFT processor 51 being needed to perform the FFT calculation. Once again, the power of the data is derived by a processor 52. The noise power is then summed over the OFDM pilots by a summer 53 where the value is subtracted from the corresponding early part of the signal by a subtractor 58. The processing for the early part of the signal is identical to that of the late apart from the portion of the input signal that is processed. The signal is then passed through a digital low-pass filter 59 and the output signal is once again used to synchronise the receiver.

The general Early-Late algorithm involves calculating the Early DFT on one symbol, and the Late DFT on another symbol. However, due to the large savings of the above methods, it becomes possible to calculate both Early DFT and Late DFT outputs, for one symbol.

The Early output is:

$$X'_E(k) = X(k) + \sum_{n'=-M}^{n'=-1} [\chi(n') - \chi(n'+N)] W_N^{kn'}$$
(Equation 5)

The Late output is:

$$X'_L(k) = X(k) + \sum_{n'=N}^{n'=N+M-1} [\chi(n') - \chi(n'-N)] W_N^{kn'}$$
(Equation 6)

Taking powers, and subtracting, we get:

$$X'^2_L(k) - X'^2_E(k) =$$

$$X^2(k) + \left\{ \sum_{n'=N}^{n'=N+M-1} [\chi(n') - \chi(n'-N)] W_N^{kn'} \right\}^2 + 2 X(k) \sum_{n'=N}^{n'=N+M-1} [\chi(n') - \chi(n'-N)] W_N^{kn'}$$

$$- \left\langle X^2(k) + \left\{ \sum_{n'=-M}^{n'=-1} [\chi(n') - \chi(n'+N)] W_N^{kn'} \right\}^2 + 2 X(k) \sum_{n'=-M}^{n'=-1} [\chi(n') - \chi(n'+N)] W_N^{kn'} \right\rangle$$
(Equation 7)

The power of the data portion cancels out and, after averaging, the crossed terms become very close to zero, and can be ignored for all practical purposes (they are the average of noise with zero mean). Hence, all we need to calculate is:

$$X'^2_L - X'^2_E \approx \left\{ \sum_{n'=N}^{n'=N+M-1} [\chi(n') - \chi(n'-N)] W_N^{kn'} \right\}^2 - \left\{ \sum_{n'=-M}^{n'=-1} [\chi(n') - \chi(n'+N)] W_N^{kn'} \right\}^2$$
(Equation 8)

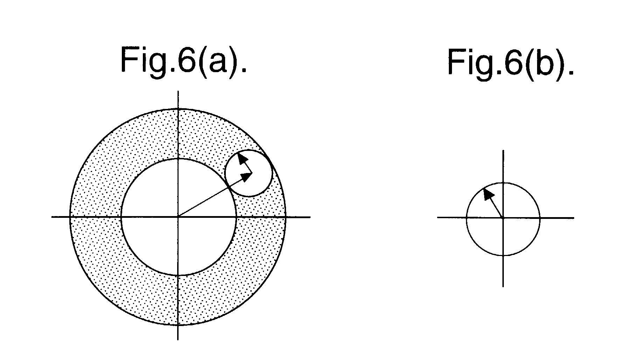

Hence, including the data portion becomes unnecessary. The effect of this is shown in Figure 6a which illustrates the output vector for an Early output. The first vector is the data FFT output, and the second vector is the additive noise, caused by taking the data too early. The power of this vector would be subtracted from the power of a corresponding late vector, to yield a noise power estimate. Clearly, the noise average is zero, although the noise power average is not. Figure 6b shows the result when only the early and late portions from one symbol are used, and the data portion is ignored. This vector represents the noise on the data, and provides a synchronising signal for synchronising the receiver.

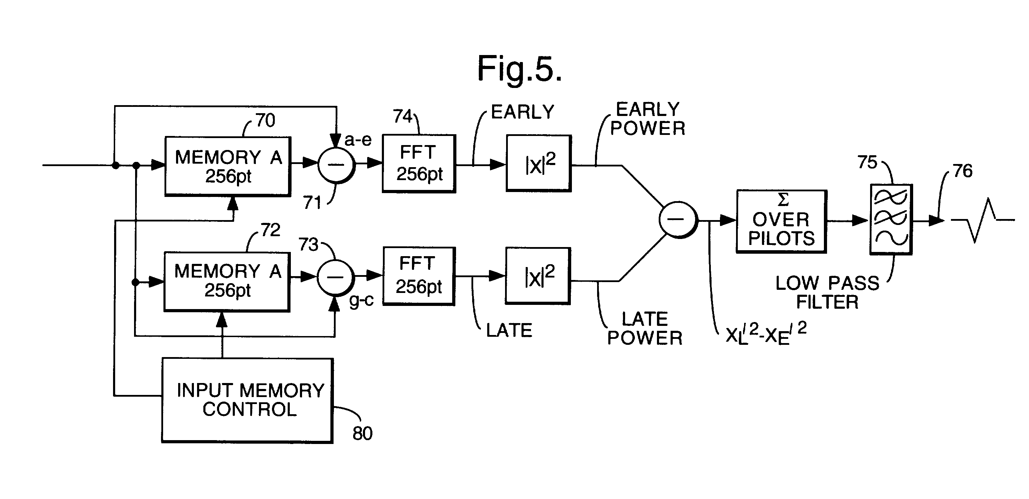

A third embodiment of the present invention is shown is Figure 5. By removing the need for calculating the data DFT the system is simplified even further. Digital OFDM data is fed into a memory 70 under control of a memory controller 80. By controlling the data stored in the memory and releasing stored data at an appropriate time, the calculations for the a - e portion of the signal is achieved by a subtractor 71. A similar process is carried out by the memory 72 and the subtractor 73 to calculate the g - c portion of the signal. A 256 point FFT is then performed on the data by a FFT processor 74. The power of the values are then calculated and are then subtracted from the late portion of the signal. The sum of the powers are calculated over the OFDM pilots and passed though a digital low-pass filter to give an output 76 which is used to synchronise the receiver.

It should be appreciated that the two FFT devices shown in Figures 3, 4 or 5 could be time multiplexed therefore reducing the number of FFT devices necessary.

It will also be appreciated by anyone skilled in the art that any multi-carrier signal could be used including both orthogonal frequency division multiplex signals and discrete multi-tone signals.

## Claims

1. A method of synchronising a receiver of an incoming multi-carrier signal which includes data, the method comprising the steps of;

   detecting the data from the incoming signal by a process of calculation;
   deriving synchronising signals by a process of calculation, the synchronising signals being calculated in part from the incoming signal and in part from the calculation performed for detecting the data and;
   using the synchronising signals to synchronise the receiver.

2. The method of claim 1, further comprising filtering the data to reduce the amount of data needed for the calculation process thus further reducing the amount of computation required.

3. The method of claim 2, further comprising filtering the data such that the remaining data is coincident with scattered pilot locations in the incoming signal.

4. The method of claims 1,2 or 3, wherein the calculations are based on the Discrete Fourier Transform and are performed by use of the Fast Fourier Transform algorithm.

5. The method of claims 1, 2, 3 or 4, wherein the multi-carrier signal is an orthogonal frequency division multiplex signal.

6. Apparatus for synchronising a receiver of an incoming multi-carrier signal which includes data, the apparatus comprising;

   a detector for detecting the data from the incoming signal by a process of calculation;
   a deriving element for deriving synchronising signals by a process of calculation, the synchronising signals being calculated in part from the incoming signal and in part from the calculation performed for detecting the data and;
   a synchroniser for employing the synchronising signals to synchronise the receiver.

7. The apparatus of claim 6, further comprising a filter to filter the data to reduce the amount of data needed for the calculation process thus further reducing the amount of computation required.

8. The apparatus of claims 7, wherein the filter is adapted such that the filtered data is coincident with scattered pilot locations in the incoming signal.

9. The apparatus of claims 6, 7 or 8, further adapted for orthogonal frequency division multiplex signals.

Fig.1.

TUNER → DOWN CONVERT → A D C → MAIN DFT → DATA DEMODULATION

ORIGINAL OFDM DATA

CLOCK OSCILLATOR

EARLY AND LATE DFT PROCESSING

CLOCK CONTROL VOLTAGE

Fig.2.

| a | b | | EARLY |
| c | d | e | MIDDLE/DATA |
| f | g | | LATE |

EP 0 872 985 A2

# Fig.3.

TO DATA DEMODULATOR

EP 0 872 985 A2

# Fig.4.

EP 0 872 985 A2

Fig.5.

Fig.6(a).

Fig.6(b).